# EUROPEAN PATENT APPLICATION

(11) **EP 4 184 269 A1**
(43) Date of publication of application: **24.05.2023**
(21) Application number: 21209622.6
(22) Date of filing: 22.11.2021
(51) Int. Cl.: G05B 23/02

(54) **IMPROVING SURROGATE APPROXIMATIONS FOR PROCESS MODELS**

(71) Applicant: ABB SCHWEIZ AG, 5400 Baden (CH)
(72) Inventor: TAN, Ruomu, 68163 Mannheim (DE); K R, Chandrika, 560078 Bangalore (IN); BORRISON, Reuben, 68775 Ketsch (DE); ABUKWAIK, Hadil, 69469 Weinheim (DE); DIX, Marcel, 68167 Mannheim (DE); DOPPELHAMER, Jens, 68526 Ladenburg (DE); KLOEPPER, Benjamin, 68199 Mannheim (DE); KOTRIWALA, Arzam Muzaffar, 68526 Ladenburg (DE); RODRIGUEZ, Pablo, 68549 Ilvesheim (DE); SCHMIDT, Benedikt, 69117 Heidelberg (DE); SHARMA, Divyasheel, 560048 Bangalore (IN)
(74) Representative: Maiwald GmbH

(57) **Abstract**

A method (100) for training a surrogate approximation model (3) for a given model (2) of a process (1), wherein the given model (2) is configured to map initial conditions (4a), and/or an initial state (4b), of the process (1) to an outcome (5a), and/or an evolution (5b), of the process (1), the method (100) comprising the steps of:
• providing (110) a first set of initial conditions (4a), and/or initial states (4b), as first training samples (4);
• mapping (120), using the given model (2), these initial conditions (4a), and/or initial states (4b), to outcomes (5a), and/or evolutions (5b), of the process (1) as labels (4*) for the first training samples (4);
• training (130) the surrogate model (3) using the first training samples (4);
• sampling (140) a second set of candidate initial conditions (4a'), and/or candidate initial states (4b'), so as to augment the first training samples (4);
• classifying (150), using a feasibility classifier (6), each candidate initial condition (4a'), respectively candidate initial state (4b'), as to whether operation of the process (1) starting from this candidate initial condition (4a'), respectively from this candidate initial state (4b'), is feasible (6a) or infeasible (6b);
• creating (160) a set of second training samples (4') that comprises the candidate initial conditions (4a'), respectively candidate initial states (4b'), that have been classified "feasible" (6a) by the feasibility classifier (6);
• mapping (170), using the given model (2), these "feasible" candidate initial conditions (4a'), respectively candidate initial states (4b'), to outcomes (5a), and/or evolutions (5b), of the process (1) as labels (4'*) for the second training samples (4'); and
• further training (180) the surrogate model (3) using the second training samples (4').

## Description

### FIELD OF THE INVENTION

The invention relates to the modelling of the behavior of industrial processes that may, for example, be used to steer execution of the process towards higher efficiency or any other desired goal.

### BACKGROUND

When an industrial process is executed on an industrial plant, its future behavior may be simulated by means of a simulation model with high fidelity. Based on the result of this simulation, it can be analyzed whether that future behavior is desirable or not, and upcoming anomalies may also be predicted.

WO 2020/030 652 A1 discloses an exemplary method for obtaining a simulation model of a process that is being executed on a process module.

The high fidelity of simulation models frequently comes at the price that the simulation model is computationally expensive to evaluate. But the prediction is more valuable to the operator of the process if it is available earlier. Ideally, if predictions can be obtained much faster than in real-time, several what-if scenarios may be analyzed ahead of time. To this end, surrogate approximations of simulation models are used. These approximations mimic the input-output behavior of the full simulation model. The surrogate approximation sacrifices some of the fidelity, but is much faster to compute than the full simulation model. Training of a surrogate approximation requires at least some evaluations of the full simulation model.

### OBJECTIVE OF THE INVENTION

It is the objective of the present invention to train a surrogate approximation model in a manner that, starting from a given amount of evaluations of the full simulation model, better predictions of the behavior of the real process may be obtained.

This objective is achieved by a method according to the main claim. Further advantageous embodiments are detailed in the dependent claims.

### DISCLOSURE OF THE INVENTION

The invention provides a method for training a surrogate approximation model (termed surrogate model in the following) for a given model of a process. The given model is configured to map initial conditions, and/or an initial state, of the process to an outcome, and/or an evolution, of the process.

The outcome, and/or the evolution, of the process may, for example, comprise one or more state variables of the process, one or more quantities that depend on such state variables, and/or more key performance indicators of the process, such as a yield of product obtained from the process. Examples for state variables are temperatures, pressures, fill levels, mass flows, voltages, electrical currents, or any other physical quantities that may be measured by one or more sensors of the plant executing the process.

The initial state, and/or the initial condition, of the process may also comprise one or more state variables. In a particularly advantageous embodiment, the initial state, and/or the initial condition, comprises one or more set-points for low-level controllers in a distributed control system controlling execution of the process. The distributed control system mainly steers the process by changing these set-points for low-level controllers. Therefore, these set-points are most valuable starting points for the evaluation of what-if scenarios.

The method starts with providing a first set of initial conditions, and/or initial states, as first training samples. These first training samples may be obtained from any suitable source. For example, they may be selected randomly from data gathered by the plant historian, and/or from a training data repository of the full simulation model.

Using the given model (i.e., the full simulation model), the initial conditions, and/or initial states, in the first training samples are mapped to outcomes, and/or evolutions, of the process. These outcomes and/or evolutions are used as labels for the first training samples. The surrogate model is then trained using the first training samples in a supervised manner. That is, the training samples are provided to the to-be-trained surrogate model, and parameters (e.g., weights in a neural network) that characterize the behavior of the surrogate model are optimized with the goal that the surrogate model maps the training samples to their respective labels.

A second set of candidate initial conditions, and/or candidate initial states is sampled, so as to augment the first training samples. Herein, "augmenting" means that the new samples are not merely slight variations of the first training samples that are mapped to the same or very similar results by the given model. Rather, it is intended that the new samples add to the overall coverage of the space of initial conditions and/or initial states. This may be achieved by choosing an appropriate sampling strategy.

Using a feasibility classifier, each candidate initial condition, respectively candidate initial state, is classified as to whether operation of the process starting from this candidate initial condition, respectively from this candidate initial state, is feasible or infeasible. A set of second training samples is then created. This second set of training samples comprises the candidate initial conditions, respectively candidate initial states, that have been classified "feasible" by the feasibility classifier.

These "feasible" candidate initial conditions, respectively candidate initial states, are then mapped to outcomes, and/or evolutions, of the process using the given model. In an analogous manner to the first training samples, the obtained outcomes and/or evolutions are used as labels for the second training samples. The surrogate model is then further trained in a supervised manner using the second training samples.

The effect of filtering out the sampled candidate initial conditions, and/or candidate initial states, that are not classified "feasible" by the feasibility classifier is two-fold.

First, unnecessary evaluations of the given model are saved. The reason for having a surrogate model in the first place is that evaluation of the given model is computationally expensive. That is, the given model is an "expensive oracle" that is to be called upon only as frequently as it is really necessary. If a candidate initial condition, and/or a candidate initial state, is not feasible, then the surrogate model will not benefit from knowing an outcome and/or evolution that will be produced starting from this initial condition and/or state, because this initial situation and/or state will not happen anyway. Thus, computing that outcome and/or evolution is in some way analogous to a day-dreamer hiring an architect for the planning of a new home that he would build if he had a million euros. Because there is no million euros in sight, that home will never be built, and the good money paid to the architect goes to waste.

Second, the quality of the resulting surrogate model is improved. If an infeasible initial condition and/or state yields a good outcome and/or evolution of the process, this may cause the surrogate model to be misleading in the sense that the infeasible initial condition and/or state shall be strived for when executing the process. Thus, if the process is steered based on predictions from the surrogate model, this may cause the ultimate performance of the process to worsen, rather than to improve. For example, attempting to achieve a temperature and/or pressure in a reaction vessel that is not designed to withstand this temperature and/or pressure may cause the reactor vessel to explode. This is in some way analogous to said day-dreamer trying to get the unobtainable million euros by drug trafficking and receiving a lengthy jail sentence instead.

The training of the surrogate model may be continued for still further iterations in the same manner. It may be stopped when a predetermined stopping criterion is fulfilled. Examples for stopping criteria include that:
- the surrogate model has achieved an acceptable prediction accuracy; and/or
- a predetermined number of iterations has been reached; and/or
- the surrogate model has generalized sufficiently well to the complete space of candidate initial conditions and/or states.

In a particularly advantageous embodiment, the sampling a second set of candidate initial conditions and/or initial states is specifically performed in the vicinity of one or more initial conditions and/or initial states from the first set. In this manner, the samples from the first set in whose vicinity to sample may be chosen according to any suitable criterion such that the most information can be gained for the surrogate model by means of the new samples.

One advantageous way to find suitable first samples as starting points for obtaining new samples in the vicinity is analyzing the performance of the surrogate model with respect to the different first samples. In a particularly advantageous embodiment, during the first training, and/or during the further training, of the surrogate model, a portion is split off from the respective set of training samples to serve as validation samples. The (further) training of the surrogate model with the remaining samples. The accuracy, and/or the uncertainty, of the output of the surrogate model is then determined with respect to the split-off validation samples, which the surrogate model has not seen in training. This yields an individual value of the accuracy, and/or for the uncertainty, for every validation sample. Based on these individual values, first samples in whose vicinity the sampling of new samples is promising may be identified.

In particular, at least one validation sample for which, according to a predetermined criterion, the surrogate model achieves a low accuracy, and/or predicts with a high uncertainty, may be chosen as a starting point in whose vicinity new initial conditions and/or initial states are sampled. That is, the poor performance of the surrogate model in a particular part of its input space is taken as an indication that the surrogate model needs more information in this particular part of the input space.

In this context, a particularly advantageous way to split off validations samples is a k-fold cross validation strategy. According to this strategy, the set of available samples is randomly partitioned into k partitions, and the validation is performed k times, wherein each partition serves as validation data exactly once and the results are averaged in the end. This requires much less computations than computing all possible manners of splitting the original set of samples, while still providing a reliable indicator with respect to which samples the performance of the surrogate model is poor.

Exemplary sampling strategies for sampling in the vicinity of previous training samples include Latin Hypercube sampling, uniform sampling, and/or randomized sampling from an assumed distribution. These strategies have proven to be effective for providing new samples with a sufficient variability, such that the new samples augment the previous samples in terms of overall coverage of the input space.

The feasibility classifier that is used for filtering candidate initial conditions, respectively candidate initial states, may comprise any sort of function that maps the candidate initial conditions, respectively the candidate initial states, to one of the discrete classes "feasible" or "infeasible". The function may also output a score for the feasibility on a suitable scale, and this score may then be discretized into the classes "feasible" and "infeasible" according to any suitable criterion.

In a particularly advantageous embodiment, the feasibility classifier comprises a trainable machine learning model. Such a model may learn from a small number of examples that are labelled with "ground truth" as to whether the respective sample is feasible or not, and generalize this knowledge across a large input space of initial conditions and/or states.

In a particularly advantageous embodiment, the feasibility classifier is trained during the training of the surrogate model. In this manner, the training of the feasibility classifier also benefits from the sampling strategy that provides new candidate initial conditions and/or states from which a gain in information is to be expected. In an analogous manner to the training of the surrogate model, the training of the feasibility classifier would not benefit from new samples that are merely slight variations of already existing samples.

In a further particularly advantageous embodiment, the training of the feasibility classifier is performed using an active learning strategy, such that an operator of the process, and/or an expert in the domain of the process, is asked to label specific candidate initial conditions and/or candidate initial states as "feasible" or "infeasible". The consultation of an operator and/or domain expert is even more of an "expensive oracle" than the computation of the full given simulation model. Therefore, it is best to focus the use of this "expensive oracle" on samples from which the training can be expected to benefit most. With the active learning strategy, it is determined online during the training in which parts of the input space the feasibility classifier still needs more information.

It depends on the concrete application at hand under which conditions a candidate initial condition, and/or a candidate initial state, may be considered feasible or infeasible. In a particularly advantageous embodiment, a candidate initial condition, and/or a candidate initial state, is considered feasible if executing the process starting from this initial condition, respectively from this initial state,
- leads to a steady operating state; and/or
- does not pose a danger to the process and/or to the plant executing the process; and/or
- is possible without a distributed control system controlling execution of the process tripping, and without the operating range of any low-level controller in this distributed control system saturating.

These criteria reflect the most important constraints for executing an process on an industrial plant and on an industrial scale.

In particular, in production, operation of the process in a steady operating state is most desirable because this ensures steady properties and a steady quality of the produced product. With large fluctuations (e.g., oscillations) in the operating state, some properties of the produced product might depend on the exact operating state in which that unit of the product was produced.

A danger to the process, and/or to the plant, may, for example, result from a violation of specifications for which the plant, any part thereof, or the processed materials are designed. For example, pipes or vessels in the plant may have a maximum temperature and/or pressure that they are built to withstand. Materials used in the process may irreversibly degrade or even ignite in response to being exposed to high temperatures. Conversely, if the plant is designed to process materials such as glass or metal in a liquid state at an elevated temperature, a drop in temperature may cause these materials to solidify and clog pipes and vessels of the plant, so that they must be cleaned with tedious manual work.

Even if a certain initial condition and/or state by itself is not a danger to the process and/or to the plant, it may not be reachable. There are usually no guarantees that the space of feasible conditions and/or states is contiguous. That is, there may be no feasible path between a first feasible condition and/or state and a second feasible condition and/or state. This is in some way analogous to "functional enclaves" in geography where a certain region of one "feasible" country is separated from the rest of this "feasible" country by a lake or a mountain range, so that it can only be reached by road on a detour via a neighboring "infeasible" country.

As discussed before, a major reason for having surrogate models is to be able to make prediction of the behavior of the process ahead of time, so that the process may be steered to change this predicted outcome for the better.

Therefore, in a further advantageous embodiment, during execution of the process, a current condition and/or state of the process is obtained. This current condition and/or state of the process is provided to the trained surrogate model. The surrogate model then outputs a prediction of the outcome and/or evolution of the process.

According to at least one predetermined criterion, a figure of merit is computed from this prediction. For example, this figure of merit may represent a key performance indicator of the process, such as production rate, product quality, or efficiency in terms of materials and/or energy usage. Execution of the process is then modified with the goal of improving this figure of merit. In this context, it is advantageous that the surrogate model delivers the prediction ahead of time, so that the modifying of the execution of the process can still have an effect on the actual outcome and/or evolution of the process.

It may not always be directly evident how exactly the execution of the process needs to be modified in order to improve the figure of merit. But the appropriate modification to the execution of the process may be determined by using more evaluations of the surrogate model.

Therefore, in a further particularly advantageous embodiment, in the course of modifying the execution of the process, multiple candidate conditions and/or states are obtained based on the current condition and/or state of the process. For example, these candidate condition and/or states may be obtained by sampling according to a sampling strategy. The multiple candidate conditions and/or states are provided to the trained surrogate model, which then outputs further predictions of the outcome and/or evolution of the process. For each such prediction, the respective figure of merit is computed. Execution of the process is then steered to a candidate condition and/or state with the best figure of merit. The faster the surrogate model can provide predictions, the more candidate conditions and/or states may be explored.

The method may be wholly or partially computer-implemented. The invention therefore also relates to one or more computer programs with machine-readable instructions that, when executed on one or more computers and/or compute instances, cause the one or more computers to perform the method described above. In this context, a virtualization platform, a hardware controller, network infrastructure devices (such as switches, bridges, routers or wireless access points), as well as end devices in the network (such as sensors, actuators or other industrial field devices) that are able to execute machine readable instructions are to be regarded as computers as well.

The invention therefore also relates to a non-transitory storage medium, and/or to a download product, with the one or more computer programs. A download product is a product that may be sold in an online shop for immediate fulfillment by download. The invention also provides one or more computers and/or compute instances with the one or more computer programs, and/or with the one or more non-transitory machine-readable storage media and/or download products.

### DESCRIPTION OF THE FIGURES

In the following, the invention is illustrated using Figures without any intention to limit the scope of the invention. The Figures show:
Figure 1: Exemplary embodiment of the method 100 for training a surrogate approximation model 3 for a given model 2 of a process 1;
Figure 2: Iterative improvement of the coverage of the input space of the surrogate model 3.

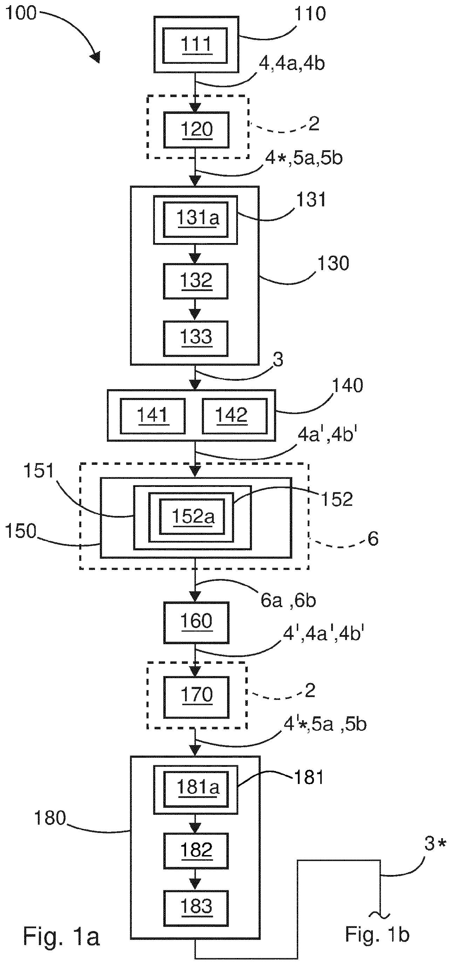

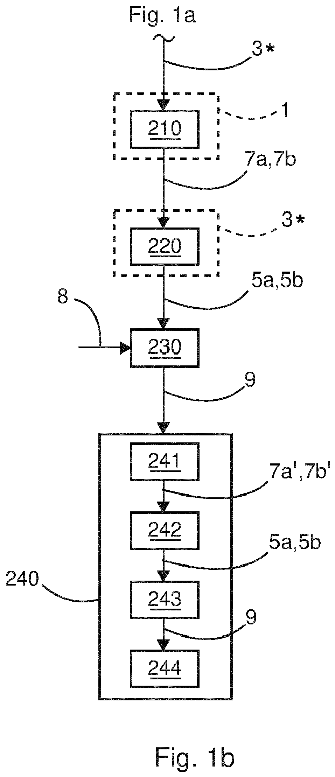

Figure 1 is a schematic flow chart of an exemplary embodiment of the method 100 for training a surrogate approximation model 3 for a given model 2 of a process 1.

In step 110, a first set of initial conditions 4a, and/or initial states 4b, as first training samples 4. According to block 111, an initial state 4a, and/or an initial condition 4b, may specifically comprise one or more set-points for low-level controllers in a distributed control system controlling execution of the process 1.

In step 120, using the given model 2, these initial conditions 4a, and/or initial states 4b, are mapped to outcomes 5a, and/or evolutions 5b, of the process 1. The outcomes 5a, and/or evolutions 5b, are used as labels 4* for the first training samples 4.

In step 130, the surrogate model 3 is trained in a supervised manner using the first training samples 4.

According to block 131, a portion may be split off from the set of first training samples 4 as validation samples. According to block 131a, this splitting may be performed according to a k-fold cross validation strategy. According to block 132, the surrogate model 3 may then be trained with the remaining first training samples 4. According to block 133, the accuracy 3a, and/or the uncertainty 3b, of the output of the surrogate model 3 may then be determined with respect to the split-off validation samples.

In step 140, a second set of candidate initial conditions 4a', and/or candidate initial states 4b', is sampled, so as to augment the first training samples 4.

According to block 141, this sampling may be specifically performed in the vicinity of one or more initial conditions 4a and/or initial states 4b from the first set.

According to block 142, the sampling may be performed according to Latin Hypercube sampling, uniform sampling, and/or randomized sampling from an assumed distribution.

In step 150, each newly sampled candidate initial condition 4a', respectively candidate initial state 4b', is classified by a feasibility classifier 6 as to whether operation of the process 1 starting from this candidate initial condition 4a', respectively from this candidate initial state 4b', is feasible 6a or infeasible 6b.

According to block 151, the feasibility classifier 6 may comprise a trainable machine learning model. According to block 152, training of this trainable machine learning model may be performed during the training of the surrogate model 3. According to block 152a, the training 152 of the feasibility classifier 6 may be performed 152a using an active learning strategy. In the course of such a strategy, an operator of the process 1, and/or an expert in the domain of the process 1, is asked to label specific candidate initial conditions 4a' and/or candidate initial states 4b' as "feasible" 6a or "infeasible" 6b.

In step 160, a set of second training samples 4' is created. This set of second training samples 4' comprises the candidate initial conditions 4a', respectively candidate initial states 4b', that have been classified "feasible" 6a by the feasibility classifier 6.

In step 170, using the given model 2, these "feasible" candidate initial conditions 4a', respectively candidate initial states 4b', are mapped to outcomes 5a, and/or evolutions 5b, of the process 1 as labels 4'* for the second training samples 4'.

In step 180, the surrogate model 3 is trained further using the second training samples 4'. The trained surrogate model obtained in this step is labelled with the reference sign 3*.

According to block 181, a portion may be split off from the set of second training samples 4' as validation samples. According to block 181a, this splitting may be performed according to a k-fold cross validation strategy. According to block 182, the surrogate model 3 may then be trained with the remaining second training samples 4'. According to block 183, the accuracy 3a, and/or the uncertainty 3b, of the output of the surrogate model 3 may then be determined with respect to the split-off validation samples.

In the example shown in Figure 1, the trained surrogate model 3* is then put to use in order to improve the performance of the real process 1.

In step 210, during execution of the process 1, a current condition 7a and/or state 7b of the process 1 is obtained.

In step 220, at least this current condition 7a and/or state 7b of the process 1 is provided to the trained surrogate model 3*. The trained surrogate model 3* then outputs a prediction of the outcome 5a and/or evolution 5b of the process 1.

In step 230, according to at least one predetermined criterion 8, a figure of merit 9 is computed from the prediction 5a, 5b.

In step 240, the execution of the process 1 is modified with the goal of improving this figure of merit 9.

According to block 241, based on the current condition 7a and/or state 7b of the process, multiple candidate conditions 7a' and/or states 7b' may be obtained. According to block 242, these multiple candidate conditions 7a and/or states 7b' may then be provided to the trained surrogate model 3*, so that the trained surrogate model 3* outputs further predictions 5a, 5b of the outcome and/or evolution of the process 1. For each such prediction, the figure of merit 9 may be computed according to block 243. According to block 244, execution of the process 1 may then be steered to a candidate condition 7a' and/or state 7b' with the best figure of merit 9.

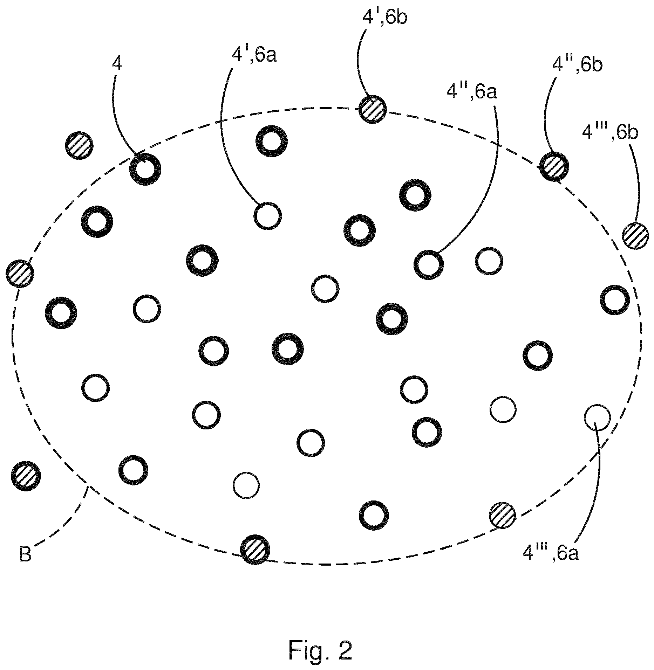

Figure 2 illustrates how the input space of the surrogate model 3 may be progressively covered with training samples that are labelled with predictions from the given model 2.

The training starts with the first set of training samples 4. After validation with split-off validation data as discussed before, new samples 4' are sampled in the vicinity of the validation samples where the surrogate model 3 predicted with a low performance. These new samples 4' are then filtered for feasibility. The candidate initial states 4a', and/or candidate initial conditions 4b', corresponding to most of these new samples 4' turn out to be feasible 6a. But some of the new samples 4' are classified infeasible 6b by the feasibility classifier 6. The feasible new samples 4', 6a are used for the next iteration of the training, with labels obtained from the given model 2.

In the same manner, a second iteration of sampling produces samples 4" that are again classified into feasible samples 4", 6a and infeasible samples 4", 6b. The feasible samples 4", 6a are used for the next iteration of the training, with labels obtained from the given model 2.

The third iteration of sampling produces samples 4'" that are again classified into feasible samples 4"', 6a and infeasible samples 4"', 6b.

With an increasing number of iterations, an operating boundary B emerges between feasible samples 6a and infeasible samples 6b. This newly gained knowledge may be used in order to push the process 1 to its limits in a certain direction in parameter space in order to improve a figure of merit 9. That is, it emerges how much operating reserve there is in every direction in parameter space, and this reserve may be exploited when steering the process towards an improvement in the figure of merit. Even a small improvement is significant, given that in many applications, only a few percent change in efficiency may already give rise to a crossing of the boundary between profit and loss. This is analogous to a boat powering upstream a river at 10 km/h while the river is flowing at 10 km/h. If 0.1 km/h more can be mustered somehow by optimization, this crosses the boundary between uselessly burning fuel and making headway.

### List of reference signs:

- 1: industrial process
- 2: given model of industrial process
- 3: surrogate model, approximates given model 2
- 3*: trained state of surrogate model 3
- 3a: accuracy of output of surrogate model 3
- 3b: uncertainty of output of surrogate model 3
- 4: first training samples
- 4a: initial conditions in first training samples 4
- 4b: initial states in first training samples 4
- 4': second (training) samples
- 4a': candidate initial conditions in second training samples 4'
- 4b': candidate initial states in second training samples 4'
- 4'": third (training) samples
- 5a: outcome of process 1, predicted by models 2, 3
- 5b: evolution of process 1, predicted by models 2, 3
- 6: feasibility classifier
- 6a: classification as feasible
- 6b: classification as infeasible
- 7a: current condition of process 1
- 7b: current state of process 1
- 7a': candidate condition of process 1
- 7b': candidate state of process 1
- 8: criterion for computation of figure of merit 9
- 9: figure of merit for outcome 5a, evolution 5b
- 100: method for training surrogate approximation model 3
- 110: providing initial conditions 4a and/or states 4b
- 111: including set-points of low-level controllers
- 120: computing predictions 5a, 5b from conditions 4a, states 4b
- 130: training surrogate model 3 with first training samples 4
- 131: splitting off validation samples from training samples 4
- 131a: splitting off according to k-fold cross validation strategy
- 132: training surrogate model 3 with remaining samples 4
- 133: determining accuracy 3a and/or uncertainty 3b
- 140: sampling second set of candidate initial conditions 4a' / states 4b'
- 141: performing sampling in vicinity of first samples 4
- 142: performing sampling according to particular strategies
- 150: classifying with feasibility classifier 6
- 151: choosing trainable machine learning model as classifier 6
- 152: training classifier 6 during training of model 3
- 152a: training according to active learning strategy
- 160: creating second set of training samples 4'
- 170: computing predictions 5a, 5b from conditions 4a', states 4b'
- 180: training surrogate model further using second training samples 4'
- 181: splitting off validation samples from training samples 4'
- 181a: splitting off according to k-fold cross validation strategy
- 182: training surrogate model 3 with remaining samples 4'
- 183: determining accuracy 3a and/or uncertainty 3b
- 210: obtaining current condition 7a / current state 7b
- 220: computing prediction 5a, 5b for condition 7a, state 7b with model 3*
- 230: computing figure of merit 9 from prediction 5a, 5b
- 240: modifying process 1 execution to improve figure of merit 9
- 241: obtaining candidate conditions 7a', candidate states 7b'
- 242: providing conditions 7a', states 7b' to trained model 3*
- 243: computing figure of merit 9 for each candidate
- 244: steer process 1 to optimize figure of merit 9

## Claims

1. A method (100) for training a surrogate approximation model (3) for a given model (2) of a process (1), wherein the given model (2) is configured to map initial conditions (4a), and/or an initial state (4b), of the process (1) to an outcome (5a), and/or an evolution (5b), of the process (1), the method (100) comprising the steps of:
• providing (110) a first set of initial conditions (4a), and/or initial states (4b), as first training samples (4);
• mapping (120), using the given model (2), these initial conditions (4a), and/or initial states (4b), to outcomes (5a), and/or evolutions (5b), of the process (1) as labels (4*) for the first training samples (4);
• training (130) the surrogate model (3) using the first training samples (4);
• sampling (140) a second set of candidate initial conditions (4a'), and/or candidate initial states (4b'), so as to augment the first training samples (4);
• classifying (150), using a feasibility classifier (6), each candidate initial condition (4a'), respectively candidate initial state (4b'), as to whether operation of the process (1) starting from this candidate initial condition (4a'), respectively from this candidate initial state (4b'), is feasible (6a) or infeasible (6b);
• creating (160) a set of second training samples (4') that comprises the candidate initial conditions (4a'), respectively candidate initial states (4b'), that have been classified "feasible" (6a) by the feasibility classifier (6);
• mapping (170), using the given model (2), these "feasible" candidate initial conditions (4a'), respectively candidate initial states (4b'), to outcomes (5a), and/or evolutions (5b), of the process (1) as labels (4'*) for the second training samples (4'); and
• further training (180) the surrogate model (3) using the second training samples (4').

2. The method (100) of claim 1, wherein the sampling (140) a second set of candidate initial conditions and/or initial states is specifically performed (141) in the vicinity of one or more initial conditions (4a) and/or initial states (4b) from the first set.

3. The method (100) of any one of claims 1 or 2,
wherein the training (130), and/or the further training (180), of the surrogate model (3) comprises:
• splitting off (131, 181), from the respective set of training samples (4, 4'), a portion as validation samples;
• training (132), respectively further training (182), the surrogate model (3) with the remaining training samples (4, 4'); and
• determining (133, 183) the accuracy (3a), and/or the uncertainty (3b), of the output of the surrogate model (3) with respect to the split-off validation samples.

4. The method (100) of claim 2 and 3, wherein at least one validation sample for which, according to a predetermined criterion, the surrogate model (3) achieves a low accuracy (3a), and/or predicts with a high uncertainty (3b), is chosen (141a) as a starting point in whose vicinity new initial conditions (4a') and/or initial states (4b') are sampled.

5. The method (100) of claim 3 or 4, wherein the splitting off (131, 181) of validation samples is performed according to a k-fold cross validation strategy (131a, 181a).

6. The method (100) of any one of claims 2 to 5,
wherein the sampling (140) is performed (142) according to Latin Hypercube sampling, uniform sampling, and/or randomized sampling from an assumed distribution.

7. The method (100) of any one of claims 1 to 6,
wherein the feasibility classifier (6) comprises (151) a trainable machine learning model.

8. The method (100) of claim 7, wherein the feasibility classifier (6) is trained (152) during the training of the surrogate model (3).

9. The method (100) of claim 8, wherein the training (152) of the feasibility classifier (6) is performed (152a) using an active learning strategy, such that an operator of the process (1), and/or an expert in the domain of the process (1), is asked to label specific candidate initial conditions (4a') and/or candidate initial states (4b') as "feasible" (6a) or "infeasible" (6b).

10. The method (100) of any one of claims 1 to 9,
wherein a candidate initial condition (4a'), and/or a candidate initial state (4b'), is considered feasible (6a) if executing the process (1) starting from this initial condition (4a'), respectively from this initial state (4b'),
• leads to a steady operating state; and/or
• does not pose a danger to the process (1) and/or to the plant executing the process (1); and/or
• is possible without a distributed control system controlling execution of the process (1) tripping, and without the operating range of any low-level controller in this distributed control system saturating.

11. The method (100) of any one of claims 1 to 10,
wherein an initial state (4a), and/or an initial condition (4b), specifically comprises (111) one or more set-points for low-level controllers in a distributed control system controlling execution of the process (1).

12. The method (100) of any one of claims 1 to 11, further comprising:
• obtaining (210), during execution of the process (1), a current condition (7a) and/or state (7b) of the process (1);
• providing (220) at least this current condition (7a) and/or state (7b) of the process (1) to the trained surrogate model (3*), thereby obtaining a prediction of the outcome (5a) and/or evolution (5b) of the process (1);
• computing (230), according to at least one predetermined criterion (8), a figure of merit (9) from the prediction (5a, 5b); and
• modifying (240) the execution of the process (1) with the goal of improving this figure of merit (9).

13. The method (100) of claim 12, wherein the modifying (240) of the execution of the process (1) further comprises:
• obtaining (241), based on the current condition (7a) and/or state (7b) of the process, multiple candidate conditions (7a') and/or states (7b');
• providing (242) these multiple candidate conditions (7a') and/or states (7b') to the trained surrogate model (3*), thereby obtaining further predictions (5a, 5b) of the outcome and/or evolution of the process (1);
• computing (243), for each such prediction (5a, 5b), the figure of merit (9); and
• steering (244) execution of the process (1) to a candidate condition (7a') and/or state (7b') with the best figure of merit (9).

14. A computer program, comprising machine-readable instructions that, when executed by one or more computers, cause the one or more computers to perform the method (100) of any one of claims 1 to 13.

15. A non-transitory machine-readable storage medium, and/or a download product, with the computer program of claim 14.

16. One or more computers with the computer program of claim 14, and/or with the non-transitory machine-readable storage medium and/or download product of claim 15.
